# EUROPÄISCHE PATENTSCHRIFT

(11) **EP 1 053 793 B1**
(45) Veröffentlichungstag und Bekanntmachung des Hinweises auf die Patenterteilung: **20.03.2002**
(21) Anmeldenummer: 99108667.9
(22) Anmeldetag: 17.05.1999
(51) Int. Cl.: B05D 1/28, B44C 1/17, B41M 5/035

(54) **Verfahren zum Auftragen von Lack und Dekor auf einen Gegenstand und Verfahren sowie Vorrichtung zum Laminieren von Lack, Dekor und Kleber auf einen Film**
Process for applying a lacquer and a decoration onto an object and process and apparatus for laminating lacquer, decorations and adhesive onto a film
Procédé pour l'application d' une peinture et d'un décor sur un objet et procédé et dispositif pour appliquer une peinture, un décor et un adhésif sur un film

(43) Veröffentlichungstag der Anmeldung: 22.11.2000
(73) Patentinhaber: Argotec Lacksysteme GmbH, 26160 Bad Zwischenahn (DE)
(72) Erfinder: Martens, Philipp, 22041 Hamburg (Wandsbeck) (DE)
(74) Vertreter: von Hellfeld, Axel, Dr. Dipl.-Phys.

(56) Entgegenhaltungen:
- EP-A- 0 570 607
- EP-A- 0 573 676
- WO-A-97/47480
- WO-A-99/08870
- DE-A- 2 453 101
- DE-A- 19 805 886
- US-A- 3 907 974

## Beschreibung

Die Erfindung betrifft ein Verfahren zum Auftragen von Lack und Dekor auf einen Gegenstand und sowie eine Vorrichtung zum Laminieren von Lack, Dekor und Kleber auf einen Film.

In der nicht vorveröffentlichten EP-A-0 993 876 ist ein Verfahren zum Aufbringen eines Farbdekors auf ein Substrat beschrieben, bei dem folgende Schritte vorgesehen sind:

Auf einen Träger mit "Release"-Eigenschaft wird ein härtbarer Lack aufgetragen, der härtbare Lack wird gehärtet, auf den Lack wird Farbdekor aufgebracht, auf das Farbdekor wird ein Kleber aufgebracht, und vom Träger mit "Release"-Eigenschaft werden die genannte Lackschicht, das Dekor und die Kleberschicht so auf das zu dekorierende Substrat aufgetragen, daß die Kleberschicht zuunterst auf dem Substrat aufliegt, wobei der Kleber durch Druck und/oder Wärme zum Verkleben auf dem Substrat aktiviert wird. Die Kleberschicht wird dort in üblicher Weise aufgebracht. Bei dem Kleber kann es sich um einen klebefähigen Lack handeln. Das Auftragen eines solchen Klebers bzw. Lackes erfolgt bei dem genannten Dokument in der üblichen Weise, worunter z. B. die Verwendung einer Auftragswalze zu verstehen ist.

Die EP 0 573 676 B1 beschreibt ein Verfahren zum Auftragen eines Farbdekors auf ein Substrat mit folgenden Schritten:

Eine erste Lackschicht wird auf einen flächigen Träger mit "Release"-Eigenschaft aufgetragen; die erste Lackschicht wird teilvernetzt; auf die teilvernetzte erste Lackschicht wird ein Farbdekor aufgebracht; auf das Farbdekor wird eine zweite Lackschicht aufgetragen und ebenfalls teilvernetzt; unter Druck und/oder erhöhter Temperatur werden die teilvernetzten Lackschichten mitsamt dem Farbdekor vom Träger auf das Substrat überführt; und auf dem Substrat werden die ersten und zweiten Lackschichten vollvernetzt.

Die vorliegende Erfindung beruht auf der Erkenntnis, daß die bei diesem Stand der Technik vorgesehene Teilvernetzung zu einer starken Haftung des Lackes an der PVA-Folie führt, was für eine Vielzahl von Anwendungen nachteilig ist weil das Abziehen der Folie erschwert ist. Dieser Nachteil kommt insbesondere bei der Dekorierung von komplizierter geformten Gegenständen zum Tragen.

Träger mit "Release"-Eigenschaften sind als solche bekannt (vgl. EP 0 573 676 A1). Als flächige Träger mit "Release"-Eigenschaften kommen insbesondere in Betracht bestimmte Papiere oder auch Kunststofffolien, die an ihrer Oberfläche so gestaltet bzw. präpariert sind, daß unter bestimmten Bedingungen aufgetragene Farbschichten oder Lackschichten in der Art eines "Abpellens" (wie ein Abziehbild) auf ein Substrat übertragbar sind. Für die hier vorliegende Erfindung kommen insbesondere als Träger mit "Release"-Eigenschaft Kunststofffolien, wie insbesondere Polyesterfolien, in Betracht, die eine geeignete Trennschicht aufweisen, um die "Release"-(Abpell)-Eigenschaft zu erreichen.

Für die hier in Rede stehende Technik der Farbdekorierung kommt es bei einer Vielzahl von Anwendungen darauf an, das Substrat in geeigneter Weise mit einem Lack zu grundieren.

Die EP-A-0 570 607 beschreibt mehrere Verfahren zum Auftragen eines Farbdedekors auf ein Substrat. Insbesondere wird dort vorgeschlagen (Anspruch 3) eine erste Lackschicht auf einen Träger mit "Release"-Eigenschaft aufzutragen, diese erste Lackschicht teil zu vernetzen, auf die teilvernetzte erste Lackschicht ein Farbdekor aufzubringen, auf das Farbdekor eine zweite Lackschicht aufzutragen und ebenfalls teil zu vernetzen und dann unter Druck und/oder erhöhter Temperatur die teilvernetzten Lackschichten mitsamt dem Dekor vom Träger auf das Substrat zu überführen und dort die Lackschichten voll zu vernetzen. Ein Kleber wird dort nicht eingesetzt. Das Verfahren ist auch in sofern aufwendig und hinsichtlich der Prozeßparameter kritisch als die Vernetzung in Teilschritten erfolgt, die genau gesteuert werden müssen.

Die US-A-3 907 974 beschreibt ein Verfahren zum Dekorieren von Oberflächen, die hitzestabil sind, wobei sowohl das Farbdekor als auch der Kleber mit herkömmlicher Drucktechnik ("printing") aufgetragen werden. Auch dort wird ein Träger mit "Release"-Eigenschaft zur Übertragung des dreischichtigen Systems verwendet.

Hinsichtlich der Vorrichtung zum Laminieren von Lack-Dekor und Kleber auf einen Film ist festzustellen, daß die EP-A-0 570 607 einen Träger mit "Release"-Eigenschaft zeigt, der von einer Trägerabwickelrolle abgewickelt und durch einen Kalander geführt wird, wobei ein Farbdekor oder ein Lack vom Träger auf ein zu dekorierendes Substrat (wie z.B. eine Kunststoffbahn oder ein Furnier) aufgetragen wird. Zwei Einrichtungen zum Abziehen von zwei Folien sind dort nicht gezeigt.

Der vorliegenden Erfindung liegt die Aufgabe zugrunde ein Verfahren zum Auftragen eines Farbdekores auf ein Substrat der eingangs genannten Art so auszugestalten, daß eine Grundierung des Substrates mit sehr guter Haft- und Abdeckwirkung erreicht wird. Weiterhin soll das Verfahren dekorierte Substrate (Gegenstände) liefern, die einen sehr guten optischen Eindruck der Dekoration zeigen, insbesondere eine Tiefenwirkung der Farbgebung, eine gute Haftung der aufgetragenen Farb- bzw. Lackschichten untereinander und auch eine hohe Kratz- und Abriebfestigkeit einer die Farbdekorierung abdeckenden Lackschicht.

Diese Aufgabe wird erfindungsgemäß durch das Verfahren nach Anspruch 1 und durch die Vorrichtung nach Anspruch 16 gelöst.

Zweckmäßige Weiterbildungen der Erfindung sind Gegenstand der abhängigen Ansprüche.

Die vorliegende Erfindung verwendet eine besondere Technik für die Auftrag der Kleberschicht, nämlich die sog. "Release"-Technik.

Das erfindungsgemäße Verfahren zum Auftragen von Lack und Dekor auf einen Gegenstand weist zumindest die folgenden Schritte auf:
a) Eine Schicht aus härtbarem Lack wird auf einen biegsamen Film mit "Release"-Eigenschaft aufgetragen,
b) der aufgetragene Lack wird gehärtet, wobei er noch mit dem Film biegsam ist,
c) ein Dekor wird mittels "Release"-Technik auf die Lack-schicht aufgebracht,
d) eine Kleberschicht wird mittels "Release"-Technik auf das Dekor aufgebracht, und
e) von dem Film werden durch "Release"-Technik die Lack-, Dekor- und Kleberschicht auf den Gegenstand übertragen, wobei die Kleberschicht zuunterst am Gegenstand anliegt.

Die Auftragung des vernetzbaren Lackes, insbesondere UV-vernetzbaren Lackes gemäß Schritt a) kann z. B. mit einer Auftragswalze durchgeführt werden. Als Film-Material sind insbesondere gut geeignet PVA, ESI und PVC. ESI ist ein Ethylen-Styrol-Interpolymer, es ist ein copolymeres Polyolefin (angeboten unter der Bezeichnung ESI von der Fa. DOW CHEMICAL). Dieses Material klebt unter Druck und Temperatur, ist gut verformbar, läßt sich sehr gut mit der sog. "Release"-Technik dekorieren und ist gut lackierbar.

Bevorzugt werden bestimmte UV-härtbare Lacke verwendet, nämlich Urethanacrylat, Polyesteracrylat, Polyetheracrylat oder Epoxyacrylat. Diese Lacke haben sich insofern als vorteilhaft erwiesen, daß sie nicht zu stark auf den Film-Materialien (insbesondere PVA) haften, andererseits aber gut genug haften für eine weitere Verarbeitung des beschichteten Films. Die nicht zu starke Haftung ist für die "release"-Auftragung des beschichteten Films auf den Gegenstand vorteilhaft, da sie das Abziehen erleichtert, was insbesondere im Bereich von Kanten oder dreidimensional geformten Bereichen des Gegenstandes bedeutsam ist.

Die genannten UV-härtbaren Lacke eignen sich besonders für die oben genannten Verfahrensschritte c) und d), bei denen die "Release"-Technik eingesetzt wird zum Auftragen des Dekors und der Kleberschicht darüber.

Als besonders geeignet für die Kleberschicht haben sich Polyurethankleber, Polyacrylate oder Copolymere aus Acrylaten erwiesen.

Bevorzugt wird also mittels "Release"-Technik auf das Dekor ein farbiger Kleber (auch als Grundlack mit klebrigen Eigenschaften zu bezeichnen) aufgetragen. Für diesen "Release"-Auftrag wird bevorzugt eine Folie aus Polypropylen (PP) verwendet.

Die Erfindung beinhaltet auch eine Vorrichtung zum Laminieren von Lack, Dekor und Kleber auf einen Film mit
- einem heizbaren Zylinder auf den ein Film mit Lack-Schicht und darüber eine erste Folie mit Dekor unter Druckeinwirkung mittels einer Andrückwalze aufgelegt werden,
- einer Einrichtung zum Abziehen der ersten Folie, so daß der Film und darauf die Lack-Schicht und darauf das Dekor auf dem Zylinder verbleiben,
- einer Einrichtung zum Aufbringen einer zweiten Folie mit Kleber über das Dekor auf dem Zylinder,
- einer Einrichtung zum Abziehen der zweiten Folie, und
- einer Einrichtung zum Aufwickeln des Films mit Lack-Schicht, Dekor und Kleber darauf, oder zum Abnehmen desselben vom Zylinder.

Diese Vorrichtung ermöglicht, daß auf einen lackierten Film sowohl ein Dekor als auch ein Grundlack praktisch in einem Schritt direkt aufeinanderfolgend aufgebracht werden können. Dies hat zunächst Kostenvorteile, darüber hinaus aber auch technische Vorteile: Es hat sich erwiesen, daß bei dem in Rede stehenden Laminat es nachteilig ist, wenn das Dekor vor dem Auftrag des Klebers (auch als "Grundlack" zu bezeichnen, da er zuunterst am zu dekorierenden Gegenstand in Anlage kommt) lange liegt oder zwischen dem Auftragen des Dekors und des Klebers (Grundlackes) eine Temperaturänderung stattfindet. Dies führt zu nachteiligem Schrumpfen und zu Nachteilen hinsichtlich der Dimensionsstabilität.

Nachfolgend werden Ausführungsbeispiele der Erfindung anhand der Zeichnung näher erläutert. Es zeigt bzw. zeigen:
- Figuren 1 bis 4: einzelne Verfahrensschritte zum Auftragen von Lack und Dekor auf einen Gegenstand; und
- Figur 5: schematisch eine Vorrichtung zum Laminieren von Lack, Dekor und Kleber auf einen Film.

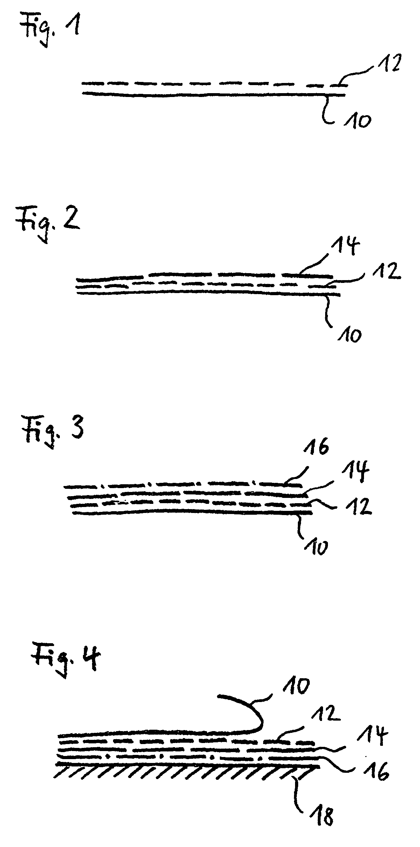

Figur 1 zeigt die erste Stufe des Verfahrens. Auf einen Film 10 aus z. B. PVA, ESI, PVC wird eine Schicht 12 aus UV-härtbarem Lack aufgetragen. Die Auftragung kann z. B. mittels einer Walze erfolgen.

Danach erfolgt eine UV-Vernetzung des Lackes, bevorzugt eine Vollvernetzung (Härtung), je nach Applikation. Der Film 10 aus den genannten Materialien ist sehr biegsam und elastisch, so daß ein dreidimensional geformter Gegenstand und auch Kantenbereiche von zu dekorierenden Substraten sauber beschichtet werden können.

Besonders geeignet ist das genannte Verfahren zum Auftragen von Lack, Dekor und Kleber (Grundlack) auf Holz und holzartige Materialien.

Das System gemäß Figur 1 aus Film 10 und vernetzter Lack-schicht 12 ist ein für sich handhabbares Zwischenprodukt. Es kann z. B. auf eine Rolle gewickelt werden. Insbesondere bei Verwendung der oben genannten bevorzugten UV-härtbaren Lacke und der genannten Materialien für den Film ist das System sehr elastisch, biegsam und geschmeidig, was für die weitere Verarbeitung bei der Dekoration von Gegenständen vorteilhaft ist.

Bei der weiteren Verarbeitung wird zunächst gemäß Figur 2 ein Dekor 14 über die Lack-Schicht 12 aufgetragen. Das Dekor 14 ist farbig und besteht insbesondere aus einer Dispersionsfarbe, wobei sowohl sublimierbare als auch nicht sublimierbare Dispersionsfarben in Betracht kommen.

Das Dekor 14 wird mittels "Release"-Technik auf die Lack-schicht 12 aufgebracht, wobei als Träger im "Release"-Verfahren Folien aus insbesondere Polypropylen, Polyethylen oder silikonisiertem Papier verwendet werden können. Es entsteht so das in Figur 2 gezeigte System aus Film 10, Lack-schicht 12 und Dekorschicht 14.

Gemäß Figur 3 wird über das Dekor 14 eine Schicht 16 aus einem Kleber aufgetragen, und zwar ebenfalls mittels "Release"-Technik. Die "Release"-Auftragung kann insbesondere von einer Folie aus Polypropylen (PP) erfolgen. Als Kleber kommt insbesondere ein farbiger Lack in Betracht mit klebrigen Eigenschaften, also ein Lack, der unter Wärmeeinwirkung klebrig wirkt und danach eine stabile Kleberverbindung zum zu dekorierenden Gegenstand herstellt. Es entsteht so das in Figur 3 gezeigte System aus Film 10, Lackschicht 12, Dekor 14 und Kleber 16. Für die Kleberschicht kommen insbesondere in Betracht Polyurethankleber, Polyacrylate, oder Copolymere aus Acrylaten.

Figur 4 zeigt schematisch, wie das Laminat gemäß Figur 3 auf einen Gegenstand 18 aufgetragen wird, wobei gemäß der "Release"-Technik der Film 10 abgezogen wird, so daß der Kleber 16 zuunterst am Gegenstand 18 anhaftet und die Lackschicht 12 zuoberst liegt. Der Gegenstand 18 kann insbesondere aus Holz oder einem holzartigen Werkstoff bestehen.

Der bevorzugt verwendete UV-härtbare Lack enthält kein Lösungsmittel, wodurch erreicht wird, daß der Film 10 nicht angegriffen wird, was insbesondere bei Verwendung von ESI sich als wichtig herausgestellt hat. Die angegebenen Lacke ermöglichen eine gute Trennung bei der abschließenden "Release"-Ablösung gemäß Figur 4.

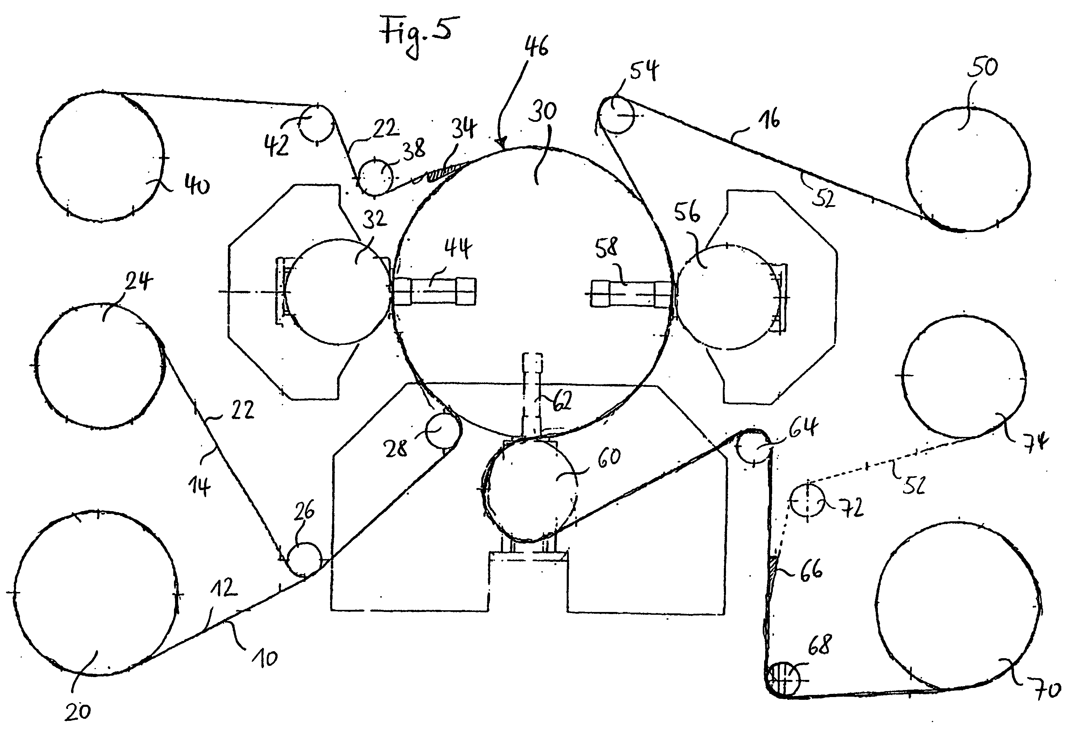

Figur 5 zeigt schematisch eine Vorrichtung zum Laminieren von Lack 12, Dekor 14 und Kleber 16 auf einem Film 10, d. h. mit der Vorrichtung gemäß Figur 5 lassen sich die in den Figuren 1 bis 4 gezeigten Verfahrensschritte in vorteilhafter Weise ausführen.

Auf einer Rolle 20 ist das fertige Produkt gemäß Figur 1 aufgerollt, d. h. ein Film aus z. B. PVA, ESI oder PVC mit darauf vernetzter Lack-Schicht 12.

Auf einer weiteren Rolle 24 ist eine Folie 22 aufgerollt, auf der das Dekor 14 aufgetragen ist. Die Folie 22 mit dem Dekor 14 wird gemeinsam mit dem Film 10, auf dem die Lackschicht 12 haftet, zu einer Umlenkrolle 26 geführt, wo das Dekor 14 direkt auf der Lackschicht 12 zu liegen kommt. Das so gebildete System aus Film 10, Lackschicht 12, Dekor 14 und Folie 22 (letztere z. B. aus PP, PE etc.) wird über eine weitere Umlenkrolle 28 auf einen heizbaren Zylinder 30 geführt, der sich im Uhrzeigersinn dreht. Der Zylinder 30 ist auf Temperaturen im Bereich von 100°C bis 180°C, bevorzugt im Bereich von 150°C ± 20°C geheizt. Eine Andrückwalze 32 wird mittels einer Andrückeinrichtung 44 gegen den Zylinder 30 gedrückt, um eine ganzflächige Laminierung mit innigem Verbund der Schichten zu erreichen. Der Druck kann im Bereich von 2 bis 5 bar liegen. Die Oberfläche der Andrückwalze 32 ist mit Silikon versehen.

Nach Passieren der Andrückwalze 32 rotiert der Zylinder 30 weiter im Uhrzeigersinn und an einem Keil 34 wird die Folie 22 von den übrigen Laminatschichten abgezogen und gelangt über Umlenkrollen 38, 42 auf eine Aufwickelrolle 40 zur weiteren Verwendung.

Auf dem Zylinder 30 verbleibt also das System 46 aus Film 10, Lack 12 und Dekor 14.

Auf einer Rolle 40 befindet sich eine Folie 52 mit Kleber 16 (Grundlack) darauf. Über eine Umlenkrolle 54 wird die Folie 52 mit dem Kleber 16 so auf den Zylinder 30 geführt, daß der Kleber 16 auf dem Dekor 14 zu liegen kommt. Es wirken weiterhin die genannten Temperaturen (bevorzugt z. B. 150°C ± 20°C). Das Laminat gelangt so zwischen eine Andrückwalze 56 mit Andrückmitteln 58 und nach weiterer Drehung des Zylinders 30 zu einer weiteren Andrückwalze 60 mit Andrückmitteln 62.

Die Walze 60 dient auch zum Abnehmen des Systems aus Film 10, Lackschicht 12, Dekor 14, Kleber 16 und Folie 52 vom Zylinder 30. Nach Umlenkung um eine Umlenkrolle 64 wird mittels eines Keils 66 die Folie 52 abgezogen und auf eine Aufwickelrolle 74 gebracht zur weiteren Verwendung. Nach Passieren des Keils 66 und Umlenkung um eine Umlenkrolle 68 gelangt somit das fertige Produkt aus Film 10, Lackschicht 12, Dekor 14 und Kleber 16 auf eine Aufwickelrolle 70 zur weiteren Verarbeitung.

## Patentansprüche

1. Verfahren zum Auftragen von Lack und Dekor auf einen Gegenstand (18) mit zumindest folgenden Schritten:
a) Eine Schicht (12) aus härtbarem Lack wird auf einen biegsamen Film (10) mit "Release"-Eigenschaft aufgetragen,
b) der aufgetragene Lack wird gehärtet, wobei er noch mit dem Film (10) biegsam ist,
c) ein Dekor (14) wird mittels "Release"-Technik auf die Lackschicht (12) aufgebracht,
d) eine Kleberschicht (16) wird mittels "Release"-Technik auf das Dekor (14) aufgebracht, und
e) von dem Film (10) werden durch "Release"-Technik die Lack-, Dekor- und Kleberschicht (12, 14, 16) auf den Gegenstand (18) übertragen, wobei die Kleberschicht (16) zuunterst am Gegenstand (18) anliegt.

2. Verfahren nach Anspruch 1,
**dadurch gekennzeichnet, daß**
der Film (10) PVA aufweist.

3. Verfahren nach Anspruch 1,
**dadurch gekennzeichnet, daß**
der Film (10) ESI aufweist.

4. Verfahren nach Anspruch 1,
**dadurch gekennzeichnet, daß**
der Film (10) PVC aufweist.

5. Verfahren nach einem der vorhergehenden Ansprüche,
**dadurch gekennzeichnet, daß**
der Lack UV-härtbar (vernetzbar) ist.

6. Verfahren nach einem der vorhergehenden Ansprüche,
**dadurch gekennzeichnet, daß**
das Dekor (14) eine Dispersionsfarbe enthält.

7. Verfahren nach einem der vorhergehenden Ansprüche,
**dadurch gekennzeichnet, daß**
das Dekor (14) in Schritt (c) von einer Folie aus Polypropylen, Polyethylen, oder silikonisiertem Papier abgezogen wird.

8. Verfahren nach einem der vorhergehenden Ansprüche,
**dadurch gekennzeichnet, daß**
in Schritt (a) der Lack mit einer Walze aufgetragen wird.

9. Verfahren nach einem der vorhergehenden Ansprüche,
**dadurch gekennzeichnet, daß**
der Lack in Schritt (b) vollvernetzt wird und Urethanacrylat und/oder Polyesteracrylat und/oder Polyetheracrylat und/oder Epoxyacrylat enthält.

10. Verfahren nach Anspruch 9,
**dadurch gekennzeichnet, daß**
der Lack einen Reaktivverdünner, wie z.B. DPGDA, TPGDA oder HDDA, enthält.

11. Verfahren nach einem der Ansprüche 9 oder 10,
**dadurch gekennzeichnet, daß**
dem Lack monofunktionelle Acrylate zugesetzt sind.

12. Verfahren nach einem der Ansprüche 9, 10 oder 11,
**dadurch gekennzeichnet, daß**
dem Lack Additive, wie Verlaufsmittel und/oder Entlüfter und/oder Entschäumer und/oder Slipagentien und/oder Benetzungsmittel und/oder Photoinitiatoren und/oder Füllstoffe und/oder Pigmente zugesetzt sind.

13. Verfahren nach einem der vorhergehenden Ansprüche,
**dadurch gekennzeichnet, daß**
die Kleberschicht (16) ein Einkomponentenkleber ist.

14. Verfahren nach Anspruch 13,
**dadurch gekennzeichnet, daß**
die Kleberschicht (16) ein Polyurethankleber, ein Polyacrylat, oder ein Copolymer aus Acrylaten ist.

15. Verfahren nach einem der vorhergehenden Ansprüche,
**dadurch gekennzeichnet, daß**
Schritt (e) unter Druck durchgeführt wird mit Temperaturen im Bereich von 100°C bis 180°c, insbesondere 100°C bis 150°C.

16. Vorrichtung zum Laminieren von Lack (12), Dekor (14) und Kleber (16) auf einen Film (10) mit
- einem heizbaren Zylinder (30) auf den ein Film (10) mit Lack-Schicht (12) und darüber eine erste Folie (22) mit Dekor (14) unter Druckeinwirkung mittels einer Andrückwalze (32) aufgelegt werden,
- einer Einrichtung (34, 40) zum Abziehen der ersten Folie (22), so daß der Film (10) und darauf die Lack-Schicht (12) und darauf das Dekor (14) auf dem Zylinder (30) verbleiben,
- einer Einrichtung (50, 54) zum Aufbringen einer zweiten Folie (52) mit Kleber (16) über das Dekor (14) auf dem Zylinder (30),
- einer Einrichtung (66, 72, 74) zum Abziehen der zweiten Folie (52), und
- einer Einrichtung (68, 70) zum Aufwickeln des Films (10) mit Lack-Schicht (12), Dekor (14) und Kleber (16) darauf, oder zum Abnehmen desselben vom Zylinder (30).

## Claims

1. A method for the application of paint and decoration on an object (18), comprising at least the following steps:
a) a layer (12) of curable paint is applied on a flexible film (10) with "release" property,
b) the applied paint is cured, while it is still flexible with the film (10),
c) a decoration (14) is applied on the paint layer (12) by means of the "release" technique,
d) an adhesive layer (16) is applied on the decoration (14) by means of the "release" technique,
e) the paint, decoration, and adhesive layers (12, 14, 16) are transferred from the film (10) onto the object (18) by means of the "release" technique, with the adhesive layer (16) being the lowermost in contact with the object (18).

2. The method according to Claim 1,
**characterised in that**
the film (10) comprises PVA.

3. The method according to Claim 1,
**characterised in that**
the film (10) comprises ESI.

4. The method according to Claim 1,
**characterised in that**
the film (10) comprises PVC.

5. The method according to one of the previous claims,
**characterised in that**
the paint is UV curable (linkable).

6. The method according to one of the previous claims,
**characterised in** the that
the decoration (14) contains a disperse paint.

7. The method according to one of the previous claims,
**characterised in** the that
in step (c) the decoration (14) is pulled off a foil of polypropylene, polyethylene, or siliconised paper.

8. The method according to one of the previous claims
**characterised in** the that
in step (a) the paint is applied by means of a roll.

9. The method according to one of the previous claims,
**characterised in** the that
in step (b) the paint is fully linked and contains urethane acrylate and/or polyester acrylate, and/or polyether acrylate, and/or epoxy acrylate.

10. The method according to Claim 9,
**characterised in** the that
the paint contains a reactive diluent such as e.g. DPGDA, TPGDA, or HDDA.

11. The method according to one of Claims 9 or 10,
**characterised in** the that
the monofunctional acrylates are added to the paint.

12. The method according to one of Claims 9, 10 or 11,
**characterised in** the that
additives such as running agents, and/or deaerating agents, and/or defoaming agents, and/or slip agents, and/or wetting agents, and/or photoinitiators, and/or fillers, and/or pigments are added to the paint.

13. The method according to one of the previous claims,
**characterised in** the that
the adhesive layer (16) is a single-component adhesive.

14. The method according to Claim 13,
**characterised in** the that
the adhesive layer (16) is a polyurethane adhesive, a polyacrylate, or a copolymer of acrylates.

15. The method according to one of the previous claims,
**characterised in** the that
step (e) is carried out under pressure with temperatures ranging from 100°C to 180°C, in particular from 100°C to 150°C.

16. An apparatus for laminating paint (12), decoration (14), and adhesive (16) on a film (10), comprising
- a heatable cylinder (30) onto which a film (10) with paint layer (12) and above these a first foil (22) with decoration (14) are placed under the application of pressure by means of a contact roll (32),
- a means (34, 40) for pulling off the first foil (22) so that the film (10) and above it the paint layer (12) and above it the decoration (14) remain on the cylinder (30),
- a means (50, 54) for the application of a second foil (52) with adhesive (16) above the decoration (14) on the cylinder (30),
- a means (66, 72, 74) for pulling off the second foil (52), and
- a means (68, 70) for winding the film (10) with paint layer (12), decoration (14), and adhesive (16) thereon, or for removing same from the cylinder (30).

## Revendications

1. Procédé pour appliquer une laque et une décoration sur un objet (18) comprenant au moins les opérations suivantes :
a) appliquer une couche (12) de laque pouvant durcir sur un film (10) souple avec une propriété de "release",
b) la laque appliquée est durcie en restant encore souple avec le film (10),
c) une décoration (14) est déposée au moyen de la technique de "release" sur la couche de laque (12),
d) une couche de colle (16) est déposée au moyen de la technique de "release" sur la décoration (14), et
e) la couche de laque, de décoration et de colle (12, 14, 16) est transférée par la technique de "release" du film (10) sur l'objet (18), la couche de colle (16) étant la plus inférieure appliquée à l'objet (18).

2. Procédé selon la revendication 1,
**caractérisé en ce que**
le film (10) présente de l'alcool polyvinylique (PVA).

3. Procédé selon la revendication 1,
**caractérisé en ce que**
le film (10) présente un interpolymère éthylène-styrène (ESI).

4. Procédé selon la revendication 1,
**caractérisé en ce que**
le film (10) présente du chlorure de polyvinyle (PVC).

5. Procédé selon l'une quelconque des revendications précédentes,
**caractérisé en ce que**
la laque peut être durcie par exposition aux rayons ultraviolets (peut être réticulée).

6. Procédé selon l'une quelconque des revendications précédentes,
**caractérisé en ce que**
la décoration (14) contient une peinture au latex.

7. Procédé selon l'une quelconque des revendications précédentes,
**caractérisé en ce que**
la décoration (14) est enlevée lors de l'opération (c) d'une feuille de polypropylène, de polyéthylène ou de papier siliconisé.

8. Procédé selon l'une quelconque des revendications précédentes,
**caractérisé en ce que**
dans l'étape (a), la laque est appliquée à l'aide d'un rouleau.

9. Procédé selon l'une quelconque des revendications précédentes
**caractérisé en ce que**
la laque est totalement réticulée dans l'étape (b) et contient de l'acrylate d'uréthane et / ou de l'acrylate de polyester et / ou de l'acrylate de polyéther et / ou de l'époxyacrylate.

10. Procédé selon la revendication 9,
**caractérisé en ce que**
la laque contient un agent de dilution réactif comme par exemple le DPGDA, le TPGDA ou le HDDA.

11. Procédé selon l'une quelconque des revendications 9 ou 10,
**caractérisé en ce que**
des acrylates monofonctionnels sont ajoutés à la laque.

12. Procédé selon l'une quelconque des revendications 9, 10 ou 11,
**caractérisé en ce que**
des additifs, comme des produits d'écoulement et / ou des produits de désaération et / ou des agents antimousse et / ou des agents de glisse et / ou des agents mouillants et / ou des photo-initiateurs et / ou des matières de remplissage et / ou des pigments, sont ajoutés à la laque.

13. Procédé selon l'une quelconque des revendications précédentes,
**caractérisé en ce que**
la couche de colle (16) est une colle à un seul composant.

14. Procédé selon la revendication 13,
**caractérisé en ce que**
la couche de colle (16) est une colle de polyuréthane, un polyacrylate, ou un copolymère d'acrylates.

15. Procédé selon l'une quelconque des revendications précédentes,
**caractérisé en ce que**
l'étape (e) est mise en oeuvre sous pression avec des températures situées dans la plage de 100 °C à 180 °C, en particulier de 100 °C à 150 °C.

16. Dispositif pour appliquer en couches de la laque (12), une décoration (14) et de la colle (16) sur un film (10), comprenant
- un rouleau (30) pouvant être chauffé sur lequel est appliqué un film'(10) avec la couche de laque (12) et par dessus cela une première feuille (22) avec la décoration (14) sous l'effet d'une pression appliquée au moyen d'un rouleau d'application de pression (32),
- une installation (34, 40) pour enlever la première feuille (22) de telle façon que le film (10) et sur celui-ci la couche de laque (12) et sur celle-ci la décoration (14) demeurent sur le cylindre (30),
- une installation (50, 54) pour appliquer une deuxième feuille (52) avec de la colle (16) sur la décoration (14) sur le cylindre (30),
- une installation (66, 72, 74) pour enlever la deuxième feuille (52) et
- une installation (68, 70) pour enrouler le film (10) avec sur lui la couche de laque (12), la décoration (14) et la colle (16), ou pour ôter ceux-ci du cylindre (30).
